# EUROPEAN PATENT APPLICATION

(11) **EP 3 480 101 A1**
(43) Date of publication of application: **08.05.2019**
(21) Application number: 18203615.2
(22) Date of filing: 31.10.2018
(51) Int. Cl.: B62M 6/45, B62M 25/08, B62K 23/00

(54) **SWITCH ON HANDLEBAR STRUCTURE**

(30) Priority: 01.11.2017 TW 10637738
(71) Applicant: Darfon Electronics Corp., 33341 Taoyuan City (TW)
(72) Inventor: Kou, Lun-Chien, 33341 Taoyuan City (TW); Chen, Wei-Liang, 33341 Taoyuan City (TW); Wu, Wei-Gou, 33341 Taoyuan City (TW)
(74) Representative: Becker Kurig Straus

(57) **Abstract**

A handlebar structure (10) for mounting on an electronic bicycle (12) is disclosed. The electronic bicycle (12) includes a motor (14) and a motor controller (16). The handlebar structure (10) includes a main body (18), a brake handle (20), and an operating device (22). The main body (18) has a transverse bar (24) and a bending rod (26) bending downward from an end of the transverse bar (24). The brake handle (20) is disposed on the bending rod (26) for braking the electronic bicycle. The operating device (22) includes a mounting structure (28) detachably disposed between a terminal end of the bending rod (26) and a mounting position of the brake handle (20) and a switch (30) disposed on the mounting structure (28) and coupled to the motor controller (16) to communicate with the motor controller (16) via electrical signals for controlling output of the motor (14).

## Description

### Field of the Invention

The present invention relates to a handlebar structure having an operating device detachably disposed on a bending rod of the handlebar structure for controlling output of a motor of an electronic bicycle according to the pre-characterizing clause of claim 1.

### Background of the Invention

In general, an electronic bicycle includes a motor. The motor is used for rotating wheels of the electronic bicycle to drive the electronic bicycle to move forward. In practical application, for helping a user control power output by the motor by himself according to the practical riding condition, such as controlling the motor to output large power to drive the electronic bicycle to go uphill, an operating device is usually disposed on the electronic bicycle for the user to perform the output control operation of the motor. However, since the aforesaid design needs the user to withdraw his hand originally holding a handlebar of the electronic bicycle to operate the operating device, this non-intuitive operation not only causes the user much inconvenience in controlling output of the motor, but also distracts the user easily to greatly influence riding safety and stability while the user is riding the electronic bicycle.

### Summary of the Invention

This in mind, the present invention aims at providing a handlebar structure having an operating device detachably disposed on a bending rod of the handlebar structure for controlling output of a motor of an electronic bicycle. In such a manner, since a user does not need to withdraw his hand originally holding a handlebar of the electronic bicycle to operate the operating device, the present invention can efficiently solve the prior art problem that operating the operation device on the electronic bicycle causes the user much inconvenience in controlling output of the motor. Thus, the present invention greatly improves riding safety and stability while the user is riding the electronic bicycle. This is achieved by a handlebar structure according to claim 1. The dependent claims pertain to corresponding further developments and improvements.

As will be seen more clearly from the detailed description following below, the claimed handlebar structure is suitable for mounting on an electronic bicycle. The electronic bicycle includes a motor and a motor controller. The motor controller is coupled to the motor for controlling output of the motor. The handlebar structure includes a main body, a first brake handle, and a first operating device. The main body has a transverse bar and a first bending rod. The first bending rod bends downward from a first end of the transverse bar. The first brake handle is disposed on the first bending rod for braking the electronic bicycle. The first operating device includes a first mounting structure and a first switch. The first mounting structure is detachably disposed between a terminal end of the first bending rod and a mounting position of the first brake handle. The first switch is disposed on the first mounting structure and coupled to the motor controller to communicate with the motor controller via a first electrical signal for controlling output of the motor.

### Brief Description of the Drawings

In the following, the invention is further illustrated by way of example, taking reference to the accompanying drawings thereof:
FIG. 1 is a diagram of an electronic bicycle according to an embodiment of the present invention,
FIG. 2, which is a diagram of a first operating device in FIG. 1 being located under a top handlebar plane and being located above a bottom handlebar plane,
FIG. 3 is a front view of the first operating device in FIG. 1 being disposed on a main body,
FIG. 4 is a partial enlarged diagram of a handlebar structure in FIG. 1 from another viewing angle,
FIG. 5 is an enlarged diagram of the first operating device in FIG. 1, and
FIG. 6 is a functional block diagram of a first switch in FIG. 5 being electrically connected to a motor controller, a monitor controller, a light indicating device, an acoustic indicating device, and an external electronic device.

### Detailed Description

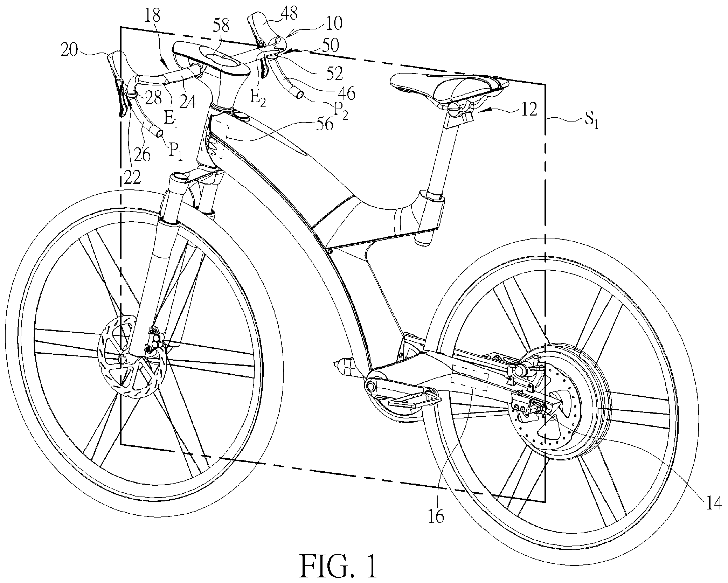

Please refer to FIG. 1, which is a diagram of a handlebar structure 10 according to an embodiment of the present invention. As shown in FIG. 1, the handlebar structure 10 is disposed on an electronic bicycle 12 for a user to control a moving direction of the electronic bicycle 10. The electronic bicycle 10 includes a motor 14 and a motor controller 16 (briefly depicted by dotted lines in FIG. 1). The motor controller 16 is connected to the motor 14 for controlling the motor 14 to output power to the electronic bicycle 12, so as to rotate wheels of the electronic bicycle 12 to help the user ride the electronic bicycle effortlessly. The handlebar structure 10 includes a main body 18, a first brake handle 20, and a first operating device 22. The main body 18 has a transverse bar 24 and a first bending rod 26. The first bending rod 26 bends downward and forward from a first end E₁ of the transverse bar 24. The first brake handle 20 is disposed on the first bending rod 26 such that the user can utilize his fingers to press the first brake handle 20 for braking the electronic bicycle 12 while holding the first bending rod 26 with his hand.

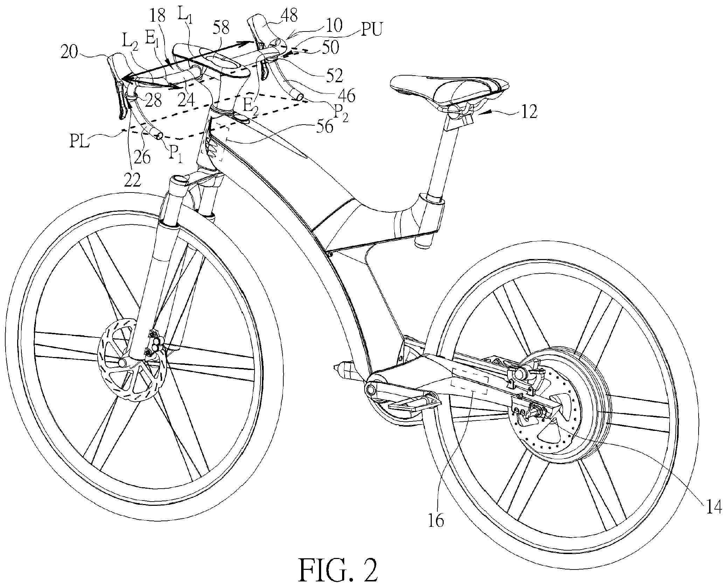

Please refer to FIG. 2, which is a diagram of the first operating device 22 in FIG. 1 being located under a top handlebar plane PU and being located above a bottom handlebar plane PL. As shown in FIG. 2, the transverse bar 24 extends along a horizontal leftward-and-rightward axis L₁, and an upper portion of the first bending rod 26 adjacent to the transverse bar 24 extends along a forward-and-backward axis L₂. The horizontal leftward-and-rightward axis L₁ and the forward-and-backward axis L₂ jointly define the top handlebar plane PU, and a plane parallel to the top handlebar plane PU and through a structural center of the terminal end P₁ of the first bending rod 26 is defined as the bottom handlebar plane PL. As shown in FIG. 2, the first operating device 22 is disposed under the top handlebar plane PU at a distance equal to or larger than 3cm, and is disposed above the bottom handlebar plane PL at a distance equal to or larger than 3cm, so as to ensure that the user could utilize his finger to operate the first operating device 22 while holding the first bending rod 26 with his hand.

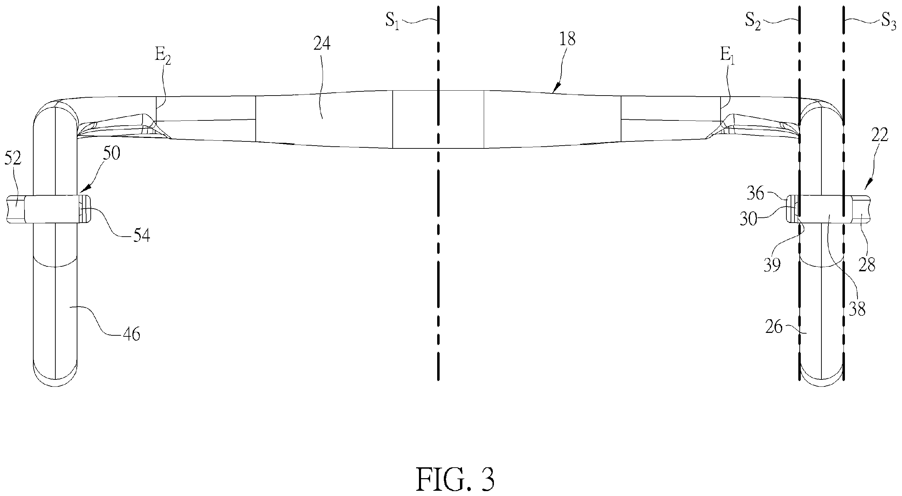

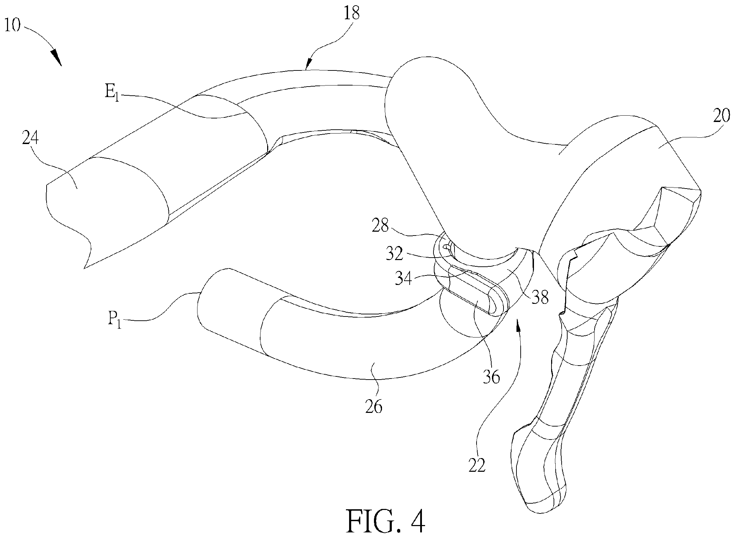

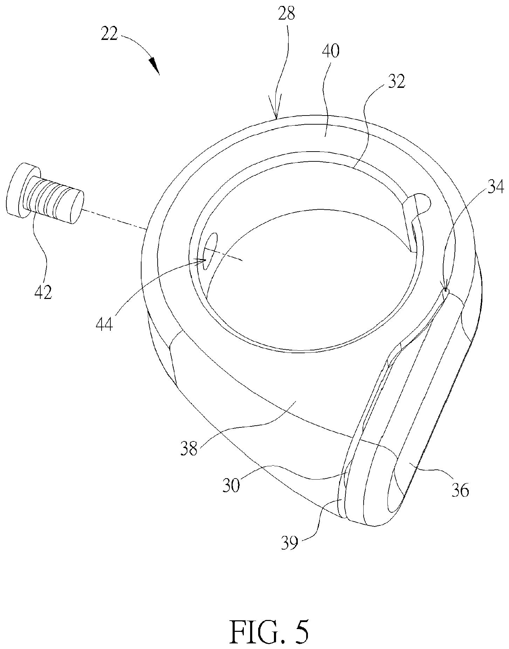

More detailed description for the design and configuration of the first operating device 22 is provided as follows. Please refer to FIG. 1, FIG. 2, FIG. 3, FIG. 4, and FIG. 5. FIG. 3 is a front view of the first operating device 22 in FIG. 1 being disposed on the main body 18. FIG. 4 is a partial enlarged diagram of the handlebar structure 10 in FIG. 1 from another viewing angle. FIG. 5 is an enlarged diagram of the first operating device 22 in FIG. 1. As shown in FIG. 1, FIG. 2, FIG. 3, FIG. 4, and FIG. 5, the first operating device 22 includes a first mounting structure 28 and a first switch 30. The first mounting structure 28 is detachably disposed between a terminal end P₁ of the first bending rod 26 and a mounting position of the first brake handle 20. The first switch 30 is disposed on the first mounting structure 28. The first switch 30 is connected to the motor controller 16 in a wired or wireless connection manner to communicate with the motor controller 16 via electrical signals, so that the motor controller 16 can control output of the motor 14 accordingly.

In this embodiment, the first mounting structure 28 could have a through hole 32 and a slot 34 for forming an elastic arm 36 located at a side of the first switch 30 (as shown in FIG. 5). Accordingly, the first mounting structure 28 can sleeve the first bending rod 26 via the through hole 32 and trigger the first switch 30 via the elastic arm 36. To be more specific, the electronic bicycle 12 could have a center longitudinal plane S₁, and the first bending rod 26 could have an inner side plane S₂ close to the center longitudinal plane S₁ and an outer side plane S₃ away from the center longitudinal plane S₁, and the first switch 30 is embedded on the first mounting structure 28 corresponding to the inner side plane S₂. The elastic arm 36 could preferably extend along the inner side plane S₂ to be located at a side of the first switch 30. Furthermore, in this embodiment, as shown in FIG. 5, a triangular protruding portion 38 extends from a front end of the first mounting structure 28. An inner side surface 39 of the triangular protruding portion 38 adjacent to the inner side plane S₂ could be spaced from the elastic arm 36, and the first switch 30 could be embedded on the inner side surface 39. In such a manner, when the elastic arm 36 is pressed, the elastic arm 36 triggers the first switch 30 to output the electrical signals to the motor controller 16 such that the motor controller 16 could control output of the motor 14 accordingly.

As for the mounting design of the first mounting structure 28, it could be as shown in FIG. 5. The first mounting structure 28 could have a ring structure 40 and a screw 42. The ring structure 40 has a screw hole 44 and the through hole 32. The screw hole 44 is preferably located at a position of the ring structure 40 corresponding to the outer side plane S₃ and avoids the triangular protruding portion 38. Accordingly, the first bending rod 26 penetrates the through hole 32, and the screw 42 is utilized to penetrate the screw hole 44 to enter the through hole 32 and then abut against the first bending rod 26, so as to position the first mounting structure 28 on the first bending rod 26. To be noted, the mounting design of the first mounting structure 28 is not limited to the aforesaid embodiment. For example, in another embodiment, the first mounting structure 28 could include a first C-shaped ring and a second C-shaped ring. The first C-shaped ring is connected to the second C-shaped ring (e.g. by a structural-engagement or screw-locking method) to form the through hole 32 for positioning the first mounting structure 28 on the first bending rod 26.

In practical application, the main body 18 could further have a second bending rod 46. The second bending rod 46 bends downward from a second end E₂ of the transverse bar 24. The handle structure 10 could further include a second brake handle 48 and a second operating device 50. The second operating device 50 is disposed on the second bending rod 46 for braking the electronic bicycle 12. The second operating device 50 includes a second mounting structure 52 and a second switch 54. The second mounting structure 52 is detachably disposed between a terminal end P₂ of the second bending rod 46 and a mounting position of the second brake handle 48. The second switch 54 is disposed on the second mounting structure 52. The second switch 54 is coupled to the motor controller 16 to communicate with the motor controller 16 via electrical signals, so that the motor controller 16 can control output of the motor 14 accordingly. In this embodiment, the first switch 30 is preferably used for controlling the motor controller 16 via electrical signals to increase output of the motor 14 and the second switch 54 is preferably used for controlling the motor controller 16 via electrical signals to decrease output of the motor 14, but not limited thereto. As for other related description for the second mounting structure 52 (e.g. the design of the elastic arm and the mounting design of the second mounting structure), it could be reasoned by analogy according to the aforesaid description for the first mounting structure 28 and omitted herein.

Via the aforesaid designs, when the user wants to control the motor 14 to provide more power for driving the electronic bicycle 12 (e.g. riding the electronic bicycle 12 to go uphill), the user just needs to utilize one finger (e.g. the ring finger) of his left hand to press the elastic arm 36 while holding the first bending rod 26 with his left hand, so as to trigger the first switch 30 for outputting an electrical signal to the motor controller 16. In such a manner, the motor controller 16 can increase output of the motor accordingly, so as to help the user ride the electronic bicycle 12 effortlessly. On the other hand, when the user wants to control the motor 14 to provide less power for driving the electronic bicycle 12 (e.g. riding the electronic bicycle 12 to go downhill), the user just needs to utilize one finger (e.g. the ring finger) of his right hand to trigger the second switch 54 while holding the second bending rod 46 with his right hand, so as to output an electrical signal to the motor controller 16. In such a manner, the motor controller 16 can decrease output of the motor 14 accordingly for achieving the power saving effect.

In summary, since the user does not need to withdraw his hand originally holding the handlebar structure 10 to control output of the motor 14, the present invention can efficiently solve the prior art problem that the non-intuitive operation causes the user much inconvenience in controlling output of the motor. Thus, the present invention greatly improves riding safety and stability while the user is riding the electronic bicycle 12.

It should be mentioned that the control designs of the first switch and the second switch are not limited to the aforesaid embodiment, meaning that the present invention could adopt the design in which the first switch and the second switch could provide different control functions respectively in another embodiment. For example, as shown in FIG. 1, the electronic bicycle 12 could further include a monitor controller 56 (briefly depicted by dotted lines in FIG. 1) and a monitor 58. The monitor controller 56 is coupled to the monitor 58 for controlling image switch of the monitor 58. The second switch 54 is coupled to the monitor controller 56 instead. In such a manner, if the user wants to control output of the motor 14 while riding the electronic bicycle 12, the user could press the first switch 30 to control output of the motor 14 via the motor controller 16 (e.g. controlling output of the motor 14 by triggering the first switch 30 in a one-button or two-button switch manner). On the other hand, if the user wants to control image switch of the monitor 58 while riding the electronic bicycle 12 (e.g. switching to a mileage image), the user could press the second switch 54 to control image switch of the monitor 58 via the monitor controller 56, so that the user could switch to an image of interest conveniently for viewing different types of riding information (e.g. mileage information or calories burning information) shown on the monitor 58.

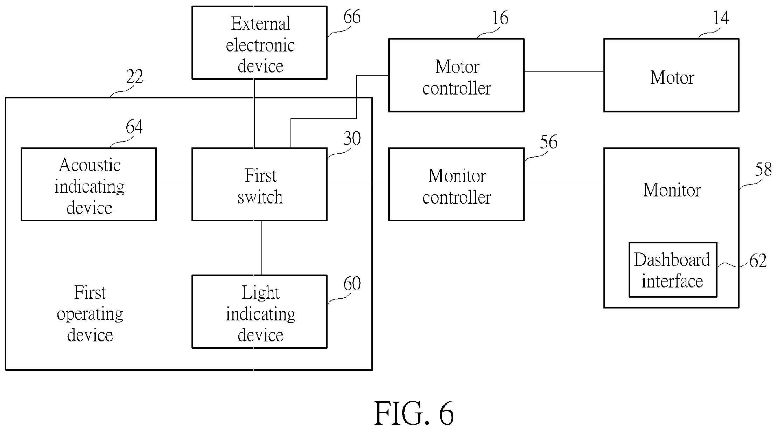

Moreover, the present invention could further provide a prompt function to immediately show the power adjustment information to the user. For example, please refer to FIG. 6, which is a functional block diagram of the first switch 30 in FIG. 5 being electrically connected to the motor controller 16, the monitor controller 56, a light indicating device 60, an acoustic indicating device 64, and an external electronic device 66. As shown in FIG. 6, the first operating device 22 could further include the light indicating device 60 and the acoustic indicating device 64, and the monitor 58 could have a dashboard interface 62. In such a manner, when the first switch 30 is triggered to communicate with the motor controller 16 via an electrical signal, output of the motor 14 controlled by the motor controller 16 via the first switch 30 could be presented by the light indicating device 60 in a multistage indication manner, or by the dashboard interface 62 in a multistage displaying manner, or by the acoustic indicating device 64 generating an acoustic prompt. Accordingly, the user can know the power adjustment information quickly and clearly. Furthermore, if the first switch 30 is coupled to the external electronic device 66 (e.g. a smart phone or a Bluetooth headset) in a wired or wireless connection manner, the external electronic device 66 could provide an acoustic prompt or a visual prompt to inform the user of the adjusted power when the first switch 30 is triggered. To be noted, the aforesaid indicating designs could be selectively omitted for simplifying the handlebar design of the present invention. As for which indicating design is adopted, it depends on the practical application of the present invention.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A handlebar structure (10) suitable for mounting on an electronic bicycle (12), the electronic bicycle (12) comprising a motor (14) and a motor controller (16), the motor controller (16) being coupled to the motor (14) for controlling output of the motor (14), the handlebar structure (10) **characterized by**:
a main body (18) having a transverse bar (24) and a first bending rod (26), the first bending rod (26) bending downward from a first end (E₁) of the transverse bar (24);
a first brake handle (20) disposed on the first bending rod (26) for braking the electronic bicycle (12); and
a first operating device (22) comprising:
a first mounting structure (28) detachably disposed between a terminal end (P₁) of the first bending rod (26) and a mounting position of the first brake handle (20); and
a first switch (30) disposed on the first mounting structure (28) and coupled to the motor controller (16) to communicate with the motor controller (16) via a first electrical signal for controlling output of the motor (14).

2. The handlebar structure (10) of claim 1, **characterized in that** the first mounting structure (28) has a through hole (32), the first mounting structure (28) sleeves the first bending rod (26) via the through hole (32), the first mounting structure (28) comprises a first C-shaped ring and a second C-shaped ring, and the first C-shaped ring is connected to the second C-shaped ring to form the through hole (32).

3. The handlebar structure (10) of claim 1, **characterized in that** the transverse bar (24) extends along a horizontal leftward-and-rightward axis (L₁), the first bending rod (26) bends downward and forward from the first end (E₁) of the transverse bar (24), an upper portion of the first bending rod (26) adjacent to the transverse bar (24) substantially extends along a forward-and-backward axis (L₂), the horizontal leftward-and-rightward axis (L₁) and the forward-and-backward axis (L₂) jointly define a top handlebar plane (PU), a plane being substantially parallel to the top handlebar plane (PU) and passing through a structural center of the terminal end (P₁) of the first bending rod (26) is defined as a bottom handlebar plane (PL), the first operating device (22) is disposed under the top handlebar plane (PU) at a distance equal to or larger than 3cm, and the first operating device (22) is disposed above the bottom handlebar plane (PL) at a distance equal to or larger than 3cm.

4. The handlebar structure (10) of claim 1, **characterized in that** a slot (34) is formed on the first mounting structure (28) to form an elastic arm (36) located at a side of the first switch (30), and when the elastic arm (36) is pressed, the elastic arm (36) triggers the first switch (30) to output the first electrical signal.

5. The handlebar structure (10) of claim 1, **characterized in that** the main body (18) further has a second bending rod (46), the second bending rod (46) bends downward from a second end (E₂) of the transverse bar (24), and the handlebar structure (10) further comprises:
a second brake handle (48) disposed on the second bending rod (46) for braking the electronic bicycle (12); and
a second operating device (50) comprising:
a second mounting structure (52) detachably disposed between a terminal end (P₂) of the second bending rod (46) and a mounting position of the second brake handle (48); and
a second switch (54) disposed on the second mounting structure (52) and coupled to the motor controller (16) to communicate with the motor controller (16) via a second electrical signal for controlling output of the motor (14).

6. The handlebar structure (10) of claim 5, **characterized in that** when the first switch (30) is triggered to input the first electrical signal to the motor controller (16), the motor controller (16) increases output of the motor (14), and when the second switch (54) is triggered to input the second electrical signal to the motor controller (16), the motor controller (16) decreases output of the motor (14).

7. The handlebar structure (10) of claim 1, **characterized in that** the electronic bicycle (12) further comprises a monitor controller (56) and a monitor (58), the monitor controller (56) is coupled to the monitor (58) for controlling image switch of the monitor (58), the main body (18) further has a second bending rod (46), the second bending rod (46) bends downward from a second end (E₂) of the transverse bar (24), and the handlebar structure (10) further comprises:
a second brake handle (48) disposed on the second bending rod (46) for braking the electronic bicycle (12); and
a second operating device (50) comprising:
a second mounting structure (52) detachably disposed between a terminal end (P₂) of the second bending rod (46) and a mounting position of the second brake handle (48); and
a second switch (54) disposed on the second mounting structure (52) and coupled to the monitor controller (56) to communicate with the monitor controller (56) via a second electrical signal for controlling image switch of the monitor (58).

8. The handlebar structure (10) of claim 1, **characterized in that** the electronic bicycle (12) has a center longitudinal plane (S₁), the first bending rod (26) has an inner side plane (S₂) close to the center longitudinal plane (S₁) and an outer side plane (S₃) away from the center longitudinal plane (S₁), and the first switch (30) is embedded on the first mounting structure (28) corresponding to the inner side plane (S₂).

9. The handlebar structure (10) of claim 8, **characterized in that** the first mounting structure (28) has an elastic arm (36), the elastic arm (36) extends along the inner side plane (S₂) to be located at a side of the first switch (30), and when the elastic arm (36) is pressed, the elastic arm (36) triggers the first switch (30) to output the first electrical signal.

10. The handlebar structure (10) of claim 9, **characterized in that** a triangular protruding portion (38) extends from a front end of the first mounting structure (28), an inner side surface of the triangular protruding portion (38) adjacent to the inner side plane (S₂) is spaced from the elastic arm (36), and the first switch (30) is embedded on the inner side surface.

11. The handlebar structure (10) of claim 10, **characterized in that** the first mounting structure (28) has a ring structure (40) and a screw (42), the ring structure (40) has a screw hole (44) and a through hole (32), the first bending rod (26) penetrates the through hole (32) and the screw (42) penetrates the screw hole (44) to enter the through hole (32) and then abut against the first bending rod (26) for positioning the first mounting structure (28) on the first bending rod (26), and the screw hole (44) is located at a position of the first mounting structure (28) corresponding to the outer side plane (S₃) and avoids the triangular protruding portion (38).

12. The handlebar structure (10) of claim 1, **characterized in that** the first switch (30) is coupled to the motor controller (16) in a wireless connection manner for establishing wireless connection between the first operating device (22) and the motor controller (16).

13. The handlebar structure (10) of claim 1, **characterized in that** the first operating device (22) further comprises a light indicating device (60), the light indicating device (60) is electrically connected to the first switch (30) for presenting a power output by the motor (14) in a multistage indication manner.

14. The handlebar structure (10) of claim 1, **characterized in that** the first operating device (22) is coupled to an external electronic device (66) in a wired or wireless connection manner, and when the first switch (30) is triggered to output the first electrical signal, the external electronic device (66) generates an acoustic prompt or a visual prompt.
